# EUROPÄISCHE PATENTSCHRIFT

(11) **EP 4 048 992 B1**
(45) Veröffentlichungstag und Bekanntmachung des Hinweises auf die Patenterteilung: **24.07.2024**
(21) Anmeldenummer: 20780655.5
(22) Anmeldetag: 24.09.2020
(51) Int. Cl.: G01K 1/14, G01K 1/143, G01K 7/18

(54) **VERFAHREN ZUM VERBINDEN EINER VORRICHTUNG MIT EINEM TRÄGERELEMENT**
METHOD FOR CONNECTING AN APPARATUS TO A CARRIER ELEMENT
PROCÉDÉ POUR RELIER UN DISPOSITIF À UN ÉLÉMENT SUPPORT

(30) Priorität: 25.10.2019 DE 102019128906
(43) Veröffentlichungstag der Anmeldung: 31.08.2022
(73) Patentinhaber: Innovative Sensor Technology IST AG, 9642 Ebnat-Kappel (CH)
(72) Erfinder: KROGMANN, Florian, 8280 Kreuzlingen (CH); GROB, Patrik, 9204 Andwil (CH); ENGELI, Roman, 8730 Uznach (CH); BARB, Yannick, 9642 Ebnat-Kappel (CH)
(74) Vertreter: Kratt-Stubenrauch, Kai Michael
(86) Internationale Anmeldenummer: PCT/EP2020/076673
(87) Internationale Veröffentlichungsnummer: WO 2021/078463

(56) Entgegenhaltungen:
- DE-A1- 102017 104 904
- DE-A1- 102017 104 926
- DE-A1- 102017 126 724

## Beschreibung

Die Erfindung betrifft ein Verfahren zum Verbinden einer Vorrichtung mit einem Trägerelement, wobei die Vorrichtung ein Temperatursensorelement oder ein Heizelement ist wobei die Vorrichtung eine Anschlussfläche aufweist und wobei das Trägerelement aus einem metallischen Material besteht. Des Weiteren betrifft die Erfindung eine Vorrichtung, welche zum Durchführen des erfindungsgemäßen Verfahrens ausgestaltet ist.

Aus dem Stand der Technik sind zahlreiche Sensorelemente zur Bestimmung einer Temperatur bekannt. Diese werden beispielsweise in Dünnschichttechnik gefertigt und weisen auf einem Substrat eine funktionale Schicht, beispielsweise Platin, auf. Mittels dieser funktionalen Schicht lässt sich eine Temperatur eines Mediums, mit dem die funktionale Schicht in Wechselwirkung steht, bestimmen.

Ein solches Sensorelement lässt sich ebenso als Heizelement nutzen. Hierbei wird eine elektrische Leistung in das Sensorelement eingespeist, wodurch sich die funktionale Schicht erwärmt und Wärme emittiert wird.

Für den Einsatz werden derartige Sensorelemente zum Schutz vor äußeren Einflüssen (mechanische, chemische, etc.) in ein Gehäuse eingebracht. Alternativ werden diese oftmals auf Oberflächen von Objekten angebracht, deren Temperatur erfasst werden soll, bspw. bei der Anwendung eines Sensorelements als Oberflächenfühler. Bei heutigen Sensorelementen, welche nach dem aktuellen Stand der Technik aufgebaut sind, werden dazu verschiedene Prozesse eingesetzt. Diese Prozesse haben diverse Nachteile:
- Löten:
   Der beim Erstarren des Lotmittels auftretende Volumenschwund kann Spannungen in das Sensorelement induzieren, damit den Temperaturkoeffizienten (TCR) und somit die Genauigkeit des Sensorelements beeinflussen. Zudem kann Flussmittel das Sensorelement vergiften. Die Temperaturbeständigkeit ist typischerweise begrenzt auf ca. < 300 °C.
- Silbersintern:
   Beim Silbersintern ist ein Sinterprozess bei mittleren bis hohen Temperaturbereichen notwendig, welche nicht mit allen Sensorelementen/Materialien kompatibel sind. Das Silber kann zudem zu Vergiftungen des Sensorelements führen. Der Sintervorgang braucht zudem eine gewisse Zeit, was sich negativ auf die Produktivität auswirkt. Beim Sintern schwindet zudem das Silberlot, was zu Spannungen im Sensor führen kann.
- Kleben mit Glaspaste/Keramikkleber oder Polymerkleber:
   Phasenübergänge und/oder Schrumpfen des Klebers, bzw. der Pate kann Spannungen im Sensorelement induzieren und die Genauigkeit reduzieren. Die Kleberverbindung ist zudem spröde und die Haftung je nach Substrat begrenzt. Zudem können unterschiedliche thermische Ausdehnungskoeffizienten zwischen Kleber oder Lot und dem Material des Sensorelements Spannungen bei Temperaturänderungen induzieren damit den Temperaturkoeffizienten des Sensorelements verändern. Eine Angleichung des Temperaturkoeffizienten ist nicht immer möglich und sehr aufwändig.

Aus dem Stand der Technik ist die Methode des "Klett-Weldings" bekannt, beispielsweise aus der WO 2019/096770 A1. Hierbei werden elektronische Bauelemente mit Anschlussflächen versehen, welche eine Vielzahl von Nanodrähten aufweisen. Durch Zusammenführen zweier solcher Anschlussflächen ist durch ein Ineinandergreifen der Nanodrähte eine mechanisch stabile und elektrisch leitfähige Verbindung geschaffen. Es ist ebenfalls bekannt geworden, nur eine der Anschlussflächen mit Nanodrähten zu versehen, wobei die zweite Anschlussfläche frei von Nanodrähten ist. Durch Zusammenfügen ist auch hier eine Verbindung etablierbar. Diese ist jedoch nur dann mechanisch stabil, wenn diese Verbindung temperaturbehandelt wird, wodurch eine Art Sintereffekt erzielt wird. Hierfür wird Wärme extern zugeführt, beispielsweise durch einen Reflowofen. Dies ist jedoch insbesondere bei größeren Bauteilen nicht praktikabel. Außerdem muss für die Montage des Sensorelements stets ein Ofen vorgehalten werden. Die DE 10 2017 104 904 A1 offenbart weiter eine Messeinheit mit einem Sensor, wobei der Sensor über eine Vielzahl von Nanodrähten mit einer Innenwand der Messeinheit verbunden ist. Dabei wird der Sensor mit den Nanodrähten in Kontakt gebracht, worauf zur Verbindung ein Druck auf den Sensor ausgeübt wird.

Die Aufgabe der vorliegenden Erfindung besteht daher darin, eine thermisch stabile Verbindung eine Vorrichtung an einem Trägerelement ohne den Einsatz von speziellem Equipment zu etablieren.

Die Aufgabe wird durch ein Verfahren gemäß Anspruch 1 und durch eine Vorrichtung gemäß Anspruch 5 gelöst.

Hinsichtlich des Verfahrens ist vorgesehen, dass das Verfahren zum Verbinden einer Vorrichtung mit einem Trägerelement dient, wobei die Vorrichtung ein Temperatursensorelement oder ein Heizelement ist, wobei die Vorrichtung ein Substrat und eine auf das Substrat aufgebrachte funktionale Schicht umfasst, welche funktionale Schicht dazu ausgestaltet ist, bei Beaufschlagung mit einer elektrischen Leistung Wärme zu emittieren, wobei die Vorrichtung oder das Trägerelement eine Anschlussfläche aufweist und wobei das Trägerelement aus einem metallischen Material besteht, umfassend:
- Bereitstellen einer Vielzahl von Nanodrähten auf der Anschlussfläche;
- Zusammenführen der Vorrichtung mit dem Trägerelement derart, dass die Vielzahl der Nanodrähte der Anschlussfläche mit einer Oberfläche des Trägerelements, bzw. der Vorrichtung (abhängig davon, auf welchem der Elemente sich die Anschlussfläche befindet), in Kontakt gebracht wird; und
- Beaufschlagen der Vorrichtung mit einer elektrischen Leistung zur Emission von Wärme, um eine nicht-lösbare Verbindung zwischen der Anschlussfläche der Vorrichtung und der Oberfläche des Trägerelements, bzw. der Vorrichtung (abhängig davon, auf welchem der Elemente sich die Anschlussfläche befindet), herzustellen.

Durch die Verwendung von Nanodrähten auf der Anschlussfläche kann eine mechanisch stabile nicht-lösbare Verbindung geschaffen werden. Die Vorrichtung wird mit dem Trägerelement unter Ausüben eines Drucks von mindestens 10 MPa und/oder höchstens 100 MPa zusammengeführt. Die nicht-lösbare Verbindung ist zumindest formschlüssig und ist abhängig vom Material beständig bis in hohe Temperaturbereiche, insbesondere bis zu 1500 °C. Für die notwendige Temperaturbehandlung der nicht-lösbaren Verbindung wird in-situ durch die Vorrichtung selbst durchgeführt. Die Vorrichtung heizt für eine vorbestimmte Zeit auf eine vorbestimmte Temperatur, wodurch die Verbindung gefestigt wird. Dieser Vorgang kann auch vor Ort beim Kunden durchgeführt werden und benötigt kein spezielles Equipment. Benötigt wird eine Ansteuerungselektronik, welche die Leistung in die Vorrichtung induziert und die Temperatur überwacht und auf die vorgegebene Temperatur regelt. Insbesondere wird hierfür eine rückgekoppelte Stromquelle verwendet, welche zeitgleich die Leistung induziert und die Temperatur der Vorrichtung ausliest.

Gemäß einer vorteilhaften Ausgestaltung des erfindungsgemäßen Verfahrens ist vorgesehen, dass die der Vorrichtung zugeführte Leistung derart eingestellt wird, dass die Anschlussfläche auf eine Temperatur von mindestens 150 °C erwärmt wird. Insbesondere wird die Temperatur für mindestens 30 s gehalten.

Gemäß einer vorteilhaften Ausgestaltung des erfindungsgemäßen Verfahrens ist vorgesehen, dass die Oberfläche des Trägerelements, bzw. der Vorrichtung (abhängig davon, auf welchem der Elemente sich die Anschlussfläche befindet), vorab gereinigt und/oder deoxidiert wird. Hierdurch wird die mechanische Stabilität der nicht-lösbaren Verbindung vergrößert.

Gemäß einer vorteilhaften Ausgestaltung des erfindungsgemäßen Verfahrens ist vorgesehen, dass vorab die Oberfläche des Trägerelements bzw. der Vorrichtung (abhängig davon, auf welchem der Elemente sich die Anschlussfläche befindet), vorab derartig bearbeitet wird, dass diese eine Strukturierung, insbesondere säulenartig, aufweist. Dadurch wird die zum einen die Oberfläche vergrößert, wodurch die Haftfähigkeit der Nanodrähte und somit die mechanische Stabilität der nicht-lösbaren Verbindung vergrößert wird. Im Falle, dass die Strukturierung säulenartig erfolgt, weist diese säulenartige Längenbereiche von 10 µm bis 1000 µm auf. Außerdem können sich durch die Strukturierung thermische Spannungen aufgrund von Unterschieden zwischen dem thermischen Ausdehnungskoeffizienten des Trägerelements und der Vorrichtung ausgeglichen werden.

Hinsichtlich der Vorrichtung ist vorgesehen, dass diese zum Durchführen des Verfahrens nach zumindest einem der Ansprüche 1 bis 4 ausgestaltet ist und umfasst:
- Ein Substrat;
- Mindestens eine auf das Substrat aufgebrachte funktionale Schicht, welche dazu ausgestaltet ist, bei Beaufschlagung mit einer elektrischen Leistung Wärme zu emittieren; - eine Ansteuerungselektronik, die dazu ausgestaltet ist, die Vorrichtung mit der elektrischen Leistung zu beaufschlagen, und die Temperatur zu überwachen und auf die vorgegebene Temperatur zu regeln, und
- Eine Anschlussfläche mit einer Vielzahl von Nanodrähten.

Es kann auch vorgesehen sein, mehrere solcher Vorrichtungen einzusetzen, beispielsweise als thermischer Strömungssensor mit zumindest einem Heizelement und zumindest einem Temperatursensor. Auch kann es vorgesehen sein, dass mehrere funktionale Schichten auf dem Substrat vorgesehen sind, welche nicht zwingend zum Erfassen der Temperatur oder zum Emittieren von Wärme vorgesehen sein müssen. So können die weitere(n) funktionale(n) Schicht(en) beispielsweise dem Bestimmen der Temperatur, der Gaskonzentration, der Strömungsgeschwindigkeit, dem Feuchtegehalt oder dem pH-Wert eines Messmediums dienen.

Gemäß einer ersten vorteilhaften Variante der erfindungsgemäßen Vorrichtung ist vorgesehen, dass die funktionale Schicht auf einem ersten Teilbereich auf einer ersten Seite des Substrats aufgebracht ist, wobei die Anschlussfläche auf einem zweiten Teilbereich auf der ersten Seite auf dem Substrat aufgebracht.

Gemäß einer zweiten vorteilhaften Variante der erfindungsgemäßen Vorrichtung ist vorgesehen, dass die funktionale Schicht auf einer ersten Seite des Substrats aufgebracht ist, wobei die Anschlussfläche auf einer zweiten Seite des Substrats aufgebracht ist, wobei sich die erste Seite und die zweite Seite gegenüberliegen.

Gemäß einer vorteilhaften Ausgestaltung der erfindungsgemäßen Vorrichtung ist vorgesehen, dass die Anschlussfläche zumindest eine Haftschicht umfasst, welche sich zwischen dem Substrat und den Nanodrähten befindet. Die Haftschicht dient dem Anhaften der Nanodrähte auf der Anschlussfläche. Vorteilhafterweise umfasst die Haftschicht Titan-Wolfram, Chrom-Platin oder eine andere typische Haftschicht. Es können auch mehrere übereinander gelagerte Haftschichten unterschiedlichen Materials vorgesehen sein.

Gemäß einer vorteilhaften Ausgestaltung der erfindungsgemäßen Vorrichtung ist vorgesehen, dass die Nanodrähte einseitig an der Anschlussfläche angebracht sind und die Anschlussfläche im Wesentlichen flächig bedecken. Die jeweilige Anschlussfläche weist also eine flächige Bedeckung mit Nanodrähte auf, sind also vollständig mit den Nanodrähten bedeckt, welche einen Nanorasen bilden.

Gemäß einer vorteilhaften Ausgestaltung der erfindungsgemäßen Vorrichtung ist vorgesehen, dass die Nanodrähte ein Metall, insbesondere Kupfer, Silber, Gold, Nickel oder Platin, umfassen.

Gemäß einer vorteilhaften Ausgestaltung der erfindungsgemäßen Vorrichtung ist vorgesehen, dass die Nanodrähte mittels eines lonenspurätzverfahrens hergestellt sind. Bevorzugterweise weisen die Nanodrähte eine Länge im Bereich von 100 nm bis 100 µm auf. Weiterhin weisen die Nanodrähte bevorzugt einen Durchmesser im Bereich von 10 nm bis 100 µm, insbesondere im Bereich von 30 nm bis 2 µm auf. Dabei bezieht sich der Begriff "Durchmesser" auf eine kreisförmige Grundfläche, wobei bei einer davon abweichenden Grundfläche eine vergleichbare Definition eines Durchmessers heranzuziehen ist. Es ist besonders bevorzugt, dass alle verwendeten Nanodrähte die gleiche Länge und den gleichen Durchmesser aufweisen.

Die Erfindung wird anhand der nachfolgenden Figuren näher erläutert. Es zeigen
- Fig. 1:: ein erstes Ausführungsbeispiel einer erfindungsgemäßen Vorrichtung; und
- Fig. 2:: ein Ausführungsbeispiel des erfindungsgemäßen Verfahrens.

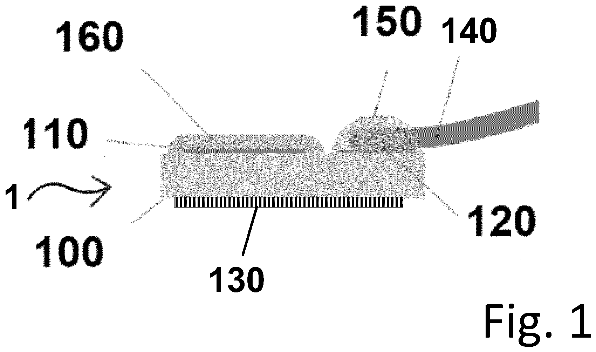

Fig. 1 zeigt ein erstes Ausführungsbeispiel einer erfindungsgemäßen Vorrichtung. Die Vorrichtung 1 umfasst ein insbesondere planares Substrat 100, welches aus einem metallischen oder keramischen Material, oder aus einem Halbleitermaterial gefertigt ist. Auf einer Oberfläche des Substrats 100 ist eine funktionale Schicht 110 mittels gängiger Dick- oder Dünnschichttechniken aufgetragen. Beispielsweise handelt es sich um eine Platinschicht, welche mäanderförmig strukturiert ist und zum Erfassen einer Temperatur oder zum Emittieren von Wärme durch Anlegen einer elektrischen Leistung ausgestaltet ist. Zum Schutz der funktionalen Schicht 160 ist diese mit einer Passivierungsschicht, beispielsweise aus einem siliziumhaltigen Glas, alternativ aus Gläsern, keramischen Materialien, Polymeren, etc., bedeckt.

Das Sensorelement 110 ist über Leiterbahnen elektrisch mit einem Kontaktpad 120 verbunden. Das Kontaktpad 120 dient zum Anschluss an ein System oder eine Vorrichtung des Kunden, beispielsweise eine Regel-/Auswerteeinheit mittels eines Anschlussdrahts 140, welcher mit dem Kontaktpad verlötet oder verschweißt ist. Bei dem Anschlussdraht 140 handelt es sich insbesondere um Draht mit einem kreisrunden Querschnitt. Alternativ kann es sich auch um einen Flachdraht oder Leadframes handeln. Der Anschlussdraht 140 kann bevorzugt aus Platin, Nickel, Silber, Gold, Kupfer oder legierten und/oder beschichteten Varianten davon bestehen. Um für eine zusätzliche mechanische Stabilität zu sorgen, kann eine Abdeckschicht 150 vorgesehen sein, welche den Endbereich des Anschlussdrahts 140 und Kontaktpad im Wesentlichen vollständig bedeckt.

Auf die von derjenigen Seite des Substrats 100, auf welcher die funktionale Schicht aufgetragen ist, abgewandten Seite des Substrats 100 ist eine Anschlussfläche 130 aufgebracht. Diese weist eine Vielzahl von Nanodrähten auf. Bevorzugterweise weisen die Nanodrähte eine Länge im Bereich von 100 nm bis 100 µm auf. Weiterhin weisen die Nanodrähte bevorzugt einen Durchmesser im Bereich von 10 nm bis 100 µm, insbesondere im Bereich von 30 nm bis 2 µm auf.

Alternativ kann vorgesehen sein, dass die Anschlussfläche 130 auf derselben Seite des Substrats 100 aufgetragen ist, auf welcher sich die funktionale Schicht 110 befindet.

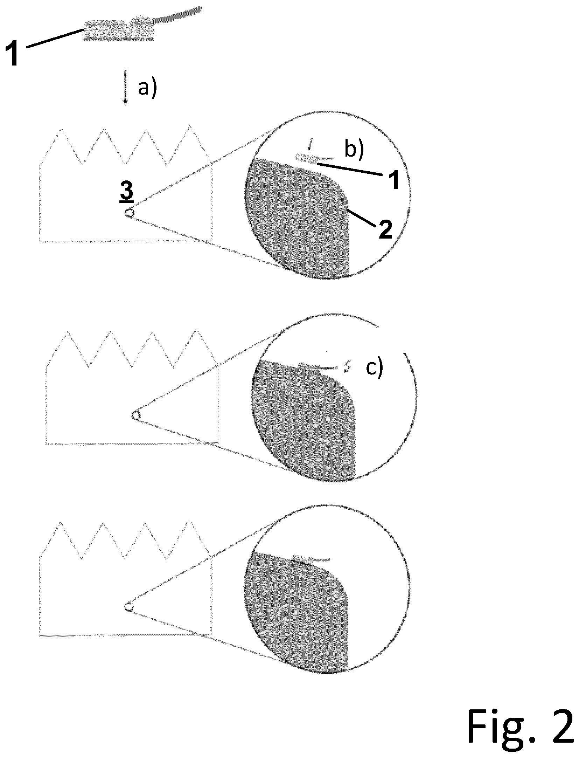

Fig. 2 zeigt ein Ausführungsbeispiel des erfindungsgemäßen Verfahrens.

In einem Verfahrensschritt a) wird die Vorrichtung 1 zur kundenseitigen Anwendung 3 an den Kunden geliefert, beispielsweise in eine Fertigungsstätte.

In einem Verfahrensschritt b) wird das Trägerelement 3 bereitgestellt. Im vorliegenden Fall handelt es sich bei dem Trägerelement um die Außenwand eines großen Tanks, welcher zu groß ist, um die später notwendige Temperaturbehandlung in einem Ofen durchzuführen. Die Vorrichtung wird nun mit einer Oberfläche des Trägerelements 3 verbunden. Hierfür wird die Vorrichtung mit einem definierten Druck auf die Oberfläche gedrückt. Hierdurch wird eine nicht-lösbare mechanische Verbindung erzielt, da sich die Nanodrähte biegen, eine große Oberfläche bilden und aufgrund von Van-der-Waals-Kräften auf der Oberfläche des Trägerelements und aufgrund der hohen Oberflächenenergie haften.

Anschließend ist es notwendig, da sich die Nanodrähte nur auf der Vorrichtung befinden, die Verbindung in einem Verfahrensschritt c) zum Zwecke der Erhöhung der mechanischen Stabilität für eine bestimmte Zeit, insbesondere länger als 30 s, auf eine Temperatur von mindestens 150 °C zu erwärmen. Andernfalls ist die mechanische Befestigung zu schwach, um einen zuverlässigen Einsatz der Vorrichtung 1 zu gewährleisten.

Die hierfür notwendige Wärme wird direkt von der Vorrichtung 1 geliefert. Dazu wird die Vorrichtung mit einer elektrischen Leistung beaufschlagt, so dass diese Wärme emittiert. insbesondere wird hierfür eine rückgekoppelte Stromquelle verwendet, welche zeitgleich die Leistung induziert und die Temperatur der Vorrichtung 1 ausliest.

Anschließend ist die nicht-lösbare Verbindung mechanisch stabil, so dass die Vorrichtung 1 anschließend bestimmungsgemäß verwendet werden kann.

Es kann alternativ vorgesehen sein, dass sich die Anschlussfläche mit den Nanodrähten auf dem Trägerelement (2) befindet. In diesem Fall wird diese mit einer Oberfläche der Vorrichtung (1) verbunden. Die beschriebenen Verfahrensschritte sind jedoch identisch.

### Bezugszeichenliste

- 1: Vorrichtung
- 100: Substrat
- 110: funktionale Schicht
- 120: Kontaktpad
- 130: Anschlussfläche
- 140: Anschlussdraht
- 150: Abdeckschicht
- 160: Passivierungsschicht
- 2: Trägerelement
- 3: kundenseitige Anwendung

## Patentansprüche

1. Verfahren zum Verbinden einer Vorrichtung (1) mit einem Trägerelement (2), wobei die Vorrichtung (1) ein Temperatursensorelement oder ein Heizelement ist, wobei die Vorrichtung ein Substrat und eine auf das Substrat (100) aufgebrachte funktionale Schicht (110) umfasst, welche funktionale Schicht dazu ausgestaltet ist, bei Beaufschlagung mit einer elektrischen Leistung Wärme zu emittieren, wobei die Vorrichtung (1) oder das Trägerelement eine Anschlussfläche (130) aufweist und wobei das Trägerelement (2) aus einem metallischen Material besteht, umfassend:
- Bereitstellen einer Vielzahl von Nanodrähten auf der Anschlussfläche (130);
- Zusammenführen der Vorrichtung (1) mit dem Trägerelement (2) derart, dass die Vielzahl der Nanodrähte der Anschlussfläche (130) mit einer Oberfläche des Trägerelements (2), bzw. der Vorrichtung (1) in Kontakt gebracht wird; und
- Beaufschlagen der Vorrichtung (1) mit einer elektrischen Leistung zur Emission von Wärme, um eine nicht-lösbare Verbindung zwischen der Anschlussfläche (130) der Vorrichtung (1) und der Oberfläche des Trägerelements (2), bzw. der Oberfläche der Vorrichtung (1) herzustellen.

2. Verfahren nach Anspruch 1, wobei die der Vorrichtung (1) zugeführte Leistung derart eingestellt wird, dass die Anschlussfläche (130) auf eine Temperatur von mindestens 150 °C erwärmt wird.

3. Verfahren nach Anspruch 1 oder 2, wobei die Oberfläche des Trägerelements (2), bzw. der Vorrichtung (1) vorab gereinigt und/oder deoxidiert wird.

4. Verfahren nach zumindest einem der vorherigen Ansprüche, wobei die Oberfläche des Trägerelements (2), bzw. der Vorrichtung (1) vorab derartig bearbeitet wird, dass diese eine Strukturierung, insbesondere säulenartig, aufweist.

5. Vorrichtung (1), welche zum Durchführen des Verfahrens nach zumindest einem der Ansprüche 1 bis 4 ausgestaltet ist, umfassend:
- Ein Substrat (100);
- Eine auf das Substrat (100) aufgebrachte funktionale Schicht (110), welche dazu ausgestaltet ist, bei Beaufschlagung mit einer elektrischen Leistung Wärme zu emittieren;
- eine Ansteuerungselektronik, die dazu ausgestaltet ist, die Vorrichtung (1) mit der elektrischen Leistung zu beaufschlagen, und die Temperatur zu überwachen und auf die vorgegebene Temperatur zu regeln, und
- Eine Anschlussfläche (130) mit einer Vielzahl von Nanodrähten.

6. Vorrichtung (1) nach Anspruch 5, wobei die funktionale Schicht (110) auf einem ersten Teilbereich auf einer ersten Seite des Substrats (100) aufgebracht ist, wobei die Anschlussfläche (130) auf einem zweiten Teilbereich auf der ersten Seite auf dem Substrat (100) aufgebracht.

7. Vorrichtung (1) nach Anschluss 5, wobei die funktionale Schicht (110) auf einer ersten Seite des Substrats (100) aufgebracht ist, wobei die Anschlussfläche (130) auf einer zweiten Seite des Substrats (100) aufgebracht ist, wobei sich die erste Seite und die zweite Seite gegenüberliegen.

8. Vorrichtung (1) zumindest einem der Ansprüche 6 oder 7, wobei die Anschlussfläche (130) zumindest eine Haftschicht umfasst, welche sich zwischen dem Substrat (100) und den Nanodrähten befindet.

9. Vorrichtung (1) nach zumindest einem der Ansprüche 5 bis 8, wobei die Nanodrähte einseitig an der Anschlussfläche (130) angebracht sind und die Anschlussfläche (130) im Wesentlichen flächig bedecken.

10. Vorrichtung (1) nach zumindest einem der Ansprüche 5 bis 9, wobei die Nanodrähte ein Metall, insbesondere Kupfer, Silber, Gold, Nickel oder Platin, umfassen.

11. Vorrichtung (1) nach zumindest einem der Ansprüche 5 bis 10, wobei die Nanodrähte mittels eines lonenspurätzverfahrens hergestellt sind.

## Claims

1. A method of connecting a device (1) to a carrier element (2), wherein the device (1) is a temperature sensing element or a heating element, wherein the device comprises a substrate and a functional layer (110) applied to the substrate (100), which functional layer is designed to emit heat when subjected to an electrical power, wherein the device (1) or the carrier element has a connection surface (130) and wherein the carrier element (2) is made of a metallic material, comprising:
- Providing a plurality of nanowires on the connection surface (130);
- bringing the device (1) together with the support member (2) such that the plurality of nanowires of the connection surface (130) are brought into contact with a surface of the support member (2) or the device (1); and
- Applying an electrical power to the device (1) to emit heat in order to establish a non-detachable connection between the connection surface (130) of the device (1) and the surface of the carrier element (2), or the surface of the device (1).

2. The method according to claim 1, wherein the power supplied to the device (1) is adjusted such that the connection surface (130) is heated to a temperature of at least 150 °C.

3. Method according to claim 1 or 2, wherein the surface of the carrier element (2) or the device (1) is cleaned and/or deoxidized in advance.

4. Method according to at least one of the preceding claims, wherein the surface of the carrier element (2) or of the device (1) is processed in advance in such a way that it has a structuring, in particular columnar.

5. Device (1) which is designed to carry out the method according to at least one of claims 1 to 4, comprising:
- A substrate (100);
- A functional layer (110) applied to the substrate (100), which is designed to emit heat when subjected to an electrical power;
- control electronics which are designed to apply the electrical power to the device (1) and to monitor the temperature and regulate it to the predetermined temperature, and
- A connection surface (130) with a plurality of nanowires.

6. The device (1) according to claim 5, wherein the functional layer (110) is applied on a first partial area on a first side of the substrate (100), wherein the connection surface (130) is applied on a second partial area on the first side on the substrate (100).

7. Device (1) according to connection 5, wherein the functional layer (110) is applied to a first side of the substrate (100), wherein the connection surface (130) is applied to a second side of the substrate (100), wherein the first side and the second side are opposite each other.

8. The device (1) of at least one of claims 6 or 7, wherein the connection surface (130) comprises at least one adhesive layer located between the substrate (100) and the nanowires.

9. The device (1) according to at least one of claims 5 to 8, wherein the nanowires are attached to one side of the connection surface (130) and cover the connection surface (130) substantially over its entire surface.

10. The device (1) according to at least one of claims 5 to 9, wherein the nanowires comprise a metal, in particular copper, silver, gold, nickel or platinum.

11. The device (1) according to at least one of claims 5 to 10, wherein the nanowires are produced by means of an ion track etching process.

## Revendications

1. Procédé pour relier un dispositif (1) à un élément de support (2), le dispositif (1) étant un élément capteur de température ou un élément chauffant, le dispositif comprenant un substrat et une couche fonctionnelle (110) appliquée sur le substrat (100), laquelle couche fonctionnelle est conçue pour émettre de la chaleur lorsqu'elle est soumise à une puissance électrique, le dispositif (1) ou l'élément de support présentant une surface de connexion (130) et l'élément de support (2) étant constitué d'un matériau métallique, comprenant :
- fournir une pluralité de nanofils sur la surface de connexion (130) ;
- l'assemblage du dispositif (1) avec l'élément de support (2) de telle sorte que la pluralité de nanofils de la plage de connexion (130) soit amenée en contact avec une surface de l'élément de support (2), respectivement du dispositif (1) ; et
- l'application d'une puissance électrique au dispositif (1) pour émettre de la chaleur afin d'établir une liaison non détachable entre la surface de connexion (130) du dispositif (1) et la surface de l'élément de support (2), ou la surface du dispositif (1).

2. Procédé selon la revendication 1, dans lequel la puissance fournie au dispositif (1) est réglée de telle sorte que la surface de connexion (130) est chauffée à une température d'au moins 150°C.

3. Procédé selon la revendication 1 ou 2, dans lequel la surface de l'élément de support (2), ou du dispositif (1), est préalablement nettoyée et/ou désoxydée.

4. Procédé selon au moins l'une des revendications précédentes, dans lequel la surface de l'élément de support (2), ou du dispositif (1), est préalablement traitée de telle sorte qu'elle présente une structuration, notamment en forme de colonne.

5. Dispositif (1) configuré pour mettre en oeuvre le procédé selon au moins l'une des revendications 1 à 4, comprenant :
- Un substrat (100) ;
- une couche fonctionnelle (110) appliquée sur le substrat (100), qui est conçue pour émettre de la chaleur lorsqu'elle est soumise à une puissance électrique ;
- une électronique de commande, qui est conçue pour alimenter le dispositif (1) avec la puissance électrique, et pour surveiller la température et la régler à la température prédéfinie, et
- Une surface de connexion (130) comprenant une pluralité de nanofils.

6. Dispositif (1) selon la revendication 5, dans lequel la couche fonctionnelle (110) est appliquée sur une première zone partielle sur un premier côté du substrat (100), dans lequel la surface de connexion (130) est appliquée sur une deuxième zone partielle sur le premier côté sur le substrat (100).

7. Dispositif (1) selon la connexion 5, dans lequel la couche fonctionnelle (110) est appliquée sur un premier côté du substrat (100), dans lequel la surface de connexion (130) est appliquée sur un deuxième côté du substrat (100), le premier côté et le deuxième côté étant opposés.

8. Dispositif (1) selon au moins l'une des revendications 6 ou 7, dans lequel la plage de connexion (130) comprend au moins une couche adhésive située entre le substrat (100) et les nanofils.

9. Dispositif (1) selon au moins l'une des revendications 5 à 8, dans lequel les nanofils sont disposés d'un côté de la surface de connexion (130) et recouvrent sensiblement la surface de connexion (130) sur toute sa surface.

10. Dispositif (1) selon au moins l'une des revendications 5 à 9, dans lequel les nanofils comprennent un métal, notamment du cuivre, de l'argent, de l'or, du nickel ou du platine.

11. Dispositif (1) selon au moins l'une des revendications 5 à 10, dans lequel les nanofils sont réalisés par un procédé de gravure ionique.
